# EUROPÄISCHE PATENTANMELDUNG

(11) **EP 4 794 314 A1**
(43) Veröffentlichungstag der Anmeldung: **19.08.2026**
(21) Anmeldenummer: 26157721.7
(22) Anmeldetag: 11.02.2026
(51) Int. Cl.: H04M 3/51, G06N 20/00

(54) **VERFAHREN ZUR ERRICHTUNG UND VERBESSERUNG EINER SPRACHKOMMUNIKATION**

(30) Priorität: 12.02.2025 AT 500942025
(71) Anmelder: Frequentis AG, 1100 Wien (AT)
(72) Erfinder: Laessig, Bernd, 1120 Wien (AT)
(74) Vertreter: Wildhack & Jellinek Patentanwälte GmbH

(57) **Zusammenfassung**

Verfahren Kommunikationssystem zur Errichtung und Verbesserung einer Sprachkommunikation zwischen einem ersten Nutzer (10) und einem zweiten Nutzer (20), wobei die Schritte vorgesehen sind:
i.) Entgegennahme einer Sprachnachricht ausgehend von einem ersten Endgerät durch eine erste Komponente (200) eines Kommunikationssystems (100),
ii.) Übertragen von Anteilen der Sprachnachricht in eine Information in der ersten Komponente, mithilfe eines neuronalen Netzes,
iii.) Übermitteln der Information an eine zweite Komponente (300) des Kommunikationssystems,
iv.) Übertragen der Information in eine Nachricht oder eine GUI-Nachricht durch die zweite Komponente unter Anwendung eines vorbestimmten Regelwerkes sowie Senden der Nachricht an das erste Endgerät,
v.) Entgegennahme einer Verifikationsinformation vom ersten Endgerät durch die zweite Komponente,
vi.) Senden einer Vorabinformation an ein zweites Endgerät (500), sowie
vii.) Herstellen einer Kommunikationsverbindung zwischen erstem und zweitem Endgerät (400, 500).

## Beschreibung

Die Erfindung betrifft ein Verfahren und ein Kommunikationssystem zur Errichtung und Verbesserung einer Sprachkommunikation zwischen einem ersten Nutzer und einem zweiten Nutzer.

Im Stand der Technik sind verschiedene Vorschläge zur Verbesserung und Erleichterung vom Austausch von Sprachnachrichten bekannt. Ein besonderes Gebiet ist dabei die Verbesserung von Kommunikation in Notrufsituationen, bei welcher unter Zeitdruck eine im allgemeinen nichtgeschulte betroffene Person mit einer geschulten und strukturiert vorgehenden Person in einer Leitstelle telefoniert.

Die Beantwortung von Notrufen in Leistellen der Polizei, Feuerwehr und medizinischer Dienste, sind da meistens im Standardablauf auf die lokal gesprochene Sprache abgestimmt. Die Notrufannahme und folgende Kommunikation mit dem Notrufenden erfolgten durch Menschen, die die lokal gesprochenen Sprachen beherrschen. Kann der Notrufende sich nicht in der lokal üblichen Sprache verständigen, ist eine direkte Übermittlung der Notfalldaten an die Leistelle nicht möglich. Um einen Informationsaustausch dennoch zu ermöglichen, muss bisher eine Übersetzung von der Fremdsprache des Notrufenden in die Lokalsprache erfolgen.

Die Übersetzung der Fremdsprache kann mit KI-basierenden Systemen durchgeführt werden und gehört zum Stand der Technik. Die KI ("Künstliche Intelligenz", meist als Software oder Modul in einer Software aufgerufen) erkennt die gesprochene Sprache an einem ersten, kurzen, wenige Sekunden langen Ausschnitt des Gesprochenen und kann anschließend aus der erkannten Sprache in die Lokalsprache übersetzen. Das Resultat des angewandten Gesamtsystems aus Spracherkennung (Erkennen der gesprochenen Sprache; sog. Language Identification) und Übersetzung ist systembedingt aber ungenau. Die Entscheidung, ob und in welchem Umfang per KI ermittelte Notrufdaten in die Entscheidung über die Bearbeitung eines Notfalles einfließen, ist oftmals nicht eindeutig ausführbar und daher schwierig. Der Leitstellenmitarbeiter kann bisher nicht beurteilen, ob das KI-resultat korrekt ist. Er kann zudem mangels Fremdsprachkenntnis nicht das Übersetzte mit dem ursprünglichen Notrufinhalt vergleichen. Ebenso wenig kann er ob des komplexen Kl-Models das Ergebnis der KI nicht bewerten. Der Leistellenmitarbeiter kann nur durch Rückfragen an den Notrufenden versuchen, die durch die KI produzierte Information z.B. durch Rückfragen zu verifizieren. Bei diesem Versuch muss jedoch zwangsläufig wieder KI als Übersetzer zum Einsatz kommen. Also kann auch über eine Rückfrage via KI die Richtigkeit der Übermittelten Information nicht mit der erforderlichen Qualität sichergestellt werden.

Die Unsicherheit im Kontext mit der Bearbeitung von Notrufen veranlasste das Europäische Parlament in der Verordnung 2024/1689 (EU Al Act oder KI-Verordnung) u.a. zu folgender Erwägung Nr. 58: "Schließlich sollten KI-Systeme, die bei der Bewertung und Einstufung von Notrufen durch natürliche Personen oder der Entsendung oder der Priorisierung der Entsendung von Not- und Rettungsdiensten wie Polizei, Feuerwehr und medizinischer Nothilfe sowie für die Triage von Patienten bei der Notfallversorgung eingesetzt werden, ebenfalls als hochriskant eingestuft werden, da sie in für das Leben und die Gesundheit von Personen und für ihr Eigentum sehr kritischen Situationen Entscheidungen treffen."

Entsprechend findet sich im Anhang III der Verordnung die Einstufung eines solchen Systems als Hochrisiko-Kl-System mit folgender Beschreibung: "KI-Systeme, die bestimmungsgemäß zur Bewertung und Klassifizierung von Notrufen von natürlichen Personen oder für die Entsendung oder Priorisierung des Einsatzes von Not- und Rettungsdiensten, einschließlich Polizei, Feuerwehr und medizinischer Nothilfe, sowie für Systeme für die Triage von Patienten bei der Notfallversorgung verwendet werden sollen."

Aus diesem Grund bleibt bisher der Stand der Technik auf einfache, nichtrisikoreiche Anwendungen von KI im Notrufbereich beschränkt.

Aufgabe der Erfindung ist es, ein Verfahren anzugeben, durch welches die Kommunikation erleichtert wird, d.h. insbesondere, durch welches die wichtigsten Basisinformationen z.B. in einer Notfallsituation sicher und möglichst schnell von einem Notrufer an eine annehmende Stelle übertragen wird. Das erfindungsgemäß Verfahren löst dies durch die Schritte:
i.) Entgegennahme einer Sprachnachricht ausgehend von einem ersten Endgerät durch eine erste Komponente eines Kommunikationssystems,
   ii.) Übertragen von Anteilen der Sprachnachricht in eine Information in der ersten Komponente, mithilfe eines neuronalen Netzes,
   iii.) Übermitteln der Information an eine zweite Komponente des Kommunikationssystems,
   iv.) Übertragen der Information in eine Textnachricht oder eine GUI-Nachricht durch die zweite Komponente unter Anwendung eines vorbestimmten Regelwerkes sowie Senden der Nachricht an das erste Endgerät,
   v.) Entgegennahme einer Verifikationsinformation vom ersten Endgerät durch die zweite Komponente,
   vi.) Senden einer Vorabinformation an ein zweites Endgerät, sowie
   vii.) Herstellen einer Kommunikationsverbindung zwischen erstem und zweitem Endgerät.

Bei einer Ausführungsform des Verfahrens ist vorgesehen, dass gleichzeitig zu Schritt i.) die Sprachnachricht durch die zweite Komponente und/oder das zweite Endgerät entgegengenommen wird. Dadurch ist das System noch sicherer und intuitiver in einer Notrufleitstelle zu bearbeiten.

Bei einer Ausführungsform des Verfahrens ist vorgesehen, dass gleichzeitig zu Schritt iii.) die Information durch das zweite Endgerät entgegengenommen wird. Auch dadurch erhält die Notrufleitstelle früher und mehr Informationen über den Notrufvorgang.

Bei einer Ausführungsform des Verfahrens ist vorgesehen, dass nach Schritt ii.) die erste Komponente ein oder mehrere weitere Sprachnachrichten vom ersten Endgerät entgegennimmt und jeweils antwortet. Dadurch wird in einfachen, aber dringlichen Notrufsituationen Zeit gespart.

Bei einer Ausführungsform des Verfahrens ist vorgesehen, dass die Daten eines Kommunikationsereignisses, zumindest umfassend Zeitstempel, Telefonnummer des Anrufers, vorzugsweise im Kommunikationssystem, gespeichert werden. Dadurch werden Informationen und Erkenntnisse gesammelt, durch die das System später verbessert und/oder Personal leichter geschult werden kann.

Bei einer Ausführungsform des Verfahrens ist vorgesehen, dass das neuronale Netz der ersten Komponente vor Schritt i.) mit einem Datensatz umfassend Kommunikationsereignissen, insbesondere Kommunikation in Notrufsituationen, trainiert wird. Dadurch kann eine wesentliche Komponente des Systems mit einer höheren Erfolgsquote automatisiert arbeiten.

Das erfindungsgemäße Kommunikationssystem für zumindest teilweise sprachliche Kommunikationsereignisse, insbesondere Kommunikation in Notrufsituationen erreicht die Ziele, dadurch, dass es
- eine erste Komponente umfasst, die dazu ausgebildet ist, Nachrichten, insbesondere Sprachnachrichten, von einem Endgerät zu empfangen und Daten an eine zweite Komponente zu senden, wobei die erste Komponente ein neuronales Netz aufweist, das dazu ausgebildet ist, Anteile einer Sprachnachricht in eine Information zu übertragen,
- eine zweite Kommunikationseinheit, die dazu ausgebildet ist, Informationen von der ersten Komponente zu empfangen sowie Nachrichten unter Anwendung eines vorbestimmten Regelwerkes zu erstellen und an das erste Endgerät zu senden, eine Verifikationsinformation vom ersten Endgerät zu empfangen,
und die ferner dazu ausgebildet ist, Informationen an ein zweites Endgerät, insbesondere eine Notrufleitstelle weiterzugeben.

Bei einer Ausführungsform des Kommunikationssystem ist vorgesehen, dass ein zweites Endgerät vorgesehen ist, wobei das zweite Endgerät zumindest eine Schnittstelle zur Datenverbindung mit dem Kommunikationssystem, sowie eine Anzeige, Eingabemittel für einen Nutzer, insbesondere einen Leitstellenbediensteten, aufweist. Dadurch wird ein Gesamtsystem angeboten, das aufeinander abgestimmte Teile und Schnittstellen aufweist.

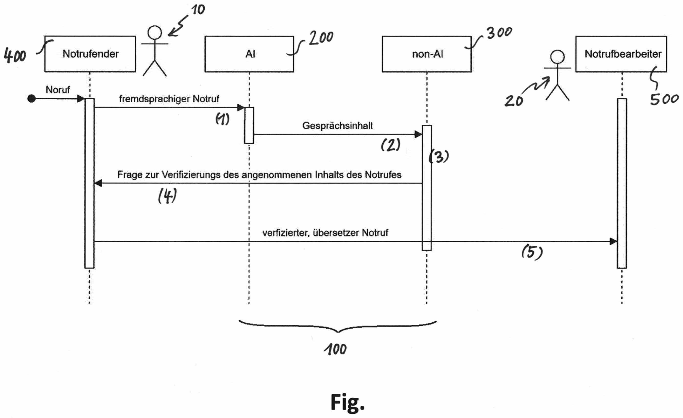

Weitere Vorteile und Ausgestaltungen der Erfindung ergeben sich aus der Beschreibung und der beiliegenden Zeichnung. Die Erfindung ist im Folgenden anhand von besonders vorteilhaften, aber nicht einschränkend zu verstehenden Ausführungsbeispielen in der Zeichnung schematisch dargestellt und wird unter Bezugnahme auf diese beispielhaft beschrieben. Fig. zeigt ein Ausführungsbeispiel eines erfindungsgemäßen Kommunikationssystems mit einem zeitlichen Ablauf von Schritten.

Es wird ein Zusammenspiel von KI- und regelbasierter Verifikation bei der Durchführung von Kommunikation in Notrufsituationen vorgeschlagen, wodurch automatisierte Übersetzen für Leistellen praxisgerecht anwendbar gemacht werden. Die Zuordnung der Kl-Übersetzung zu einer vordefinierten Fragestellung, sorgt für eine automatische Verifikation der KI-Übersetzungsresultate.

Das Verfahren spiegelt einen "Human-in-the-Loop"-Ansatz wider, in welchem KI und Algorithmen unterstützend wirken, ein Mensch aber die endgültige Entscheidung trifft. Zusätzlich interagieren eine Kl- und eine Nicht-KI-Komponente, die in einer weiteren Hinsicht ein Risiko durch einen Übersetzungsfehler ausschließt. Die Rolle des Nicht-KI-Algorithmus besteht darin, Der die von der KI generierten Erkenntnisse und Informationen zu verarbeiten, anstatt sie zu überprüfen. Dies stellt einen kooperativeren Ansatz zwischen KI und traditionellen Algorithmen dar.

Eine Komponente ist in diesem Zusammenhang ein Computer, ein computerartiges Gerät, ein Server, eine auf einem Computer arbeitende Software oder eine Softwaremodul.

Gemäß der Fig. beginnt das Verfahren vor Schritt (1) mit einem fremdsprachigen Notruf, der von einem Kommunikationssystem 100 zu bearbeiten ist. Der Notruf kommt typischerweise von einem ersten Nutzer 10, der den Notruf mit einem Endgerät 400, z.B. einem Smartphone, durchführt. Der erste Nutzer 10 erwartet dann, mit einem zweiten Nutzer 20 (oder auch "Operator"), wie etwa einem Mitarbeiter an einer Leitstelle, mit dessen Endgerät 500 verbunden zu werden. Das Kommunikationssystem 100 ist technisch, z.B. über geeignete Schnittstellen, zwischen die beiden Endgeräte 400, 500 geschaltet.

Eine erste Komponente 200 des Kommunikationssystems 100, welche ein KI-System umfasst, interpretiert und verallgemeinert die Informationen des Notrufs (2). Diese Informationen werden an eine zweite Komponente 300 des Kommunikationssystems, welches ein regelbasiertes Abfragesystem umfasst, weitergeleitet. Die zweite Komponente 300 weist keine KI auf. Das Abfragesystem der zweiten Komponente 300 bildet (3) aus den von der KI gelieferten, ggf. generalisierten, Notrufinformationen eine Frage zur Verifizierung der interpretierten Notrufinformationen.

Der notrufende erste Nutzer 10 wird vom Abfragesystem zur Beantwortung der Verifizierungsfrage aufgefordert (4). Der Notrufbearbeiter, der hier als zweiter Nutzer 20 auftritt, erhält das verifizierte Resultat (5). Das Endgerät 500 der Notrufleistelle ist beispielsweise ein Telefon oder eine Smartphone.

Die Erfindung minimiert die Risiken einer KI-basierten Sprachverarbeitung bei Notrufen in Fremdsprache. Dem Notrufenden werden einfache, vordefinierte und im Kontext zu seiner Notrufmeldung stehende Fragen gestellt, Fragen bei denen die Antwortoptionen überschaubar sind, und ohne KI in die lokale Sprache übersetzt werden können.

Die zur Übersetzung und zur Verifikation des Übersetzten benötigte Zeit beeinflussen die Dauer der Notrufannahme unwesentlich. Da die zweite Komponente 300 auf der Basis eines vordefinierten Regelwerkes arbeitet, kommt sie ohne eine KI aus. Daher arbeitet das Kommunikationssystem 100 nicht rein als KI und erfüllt die Vorgaben des EU Al Acts. Die darin geforderte "menschliche Aufsicht" ist auch dadurch gegeben, dass das Kommunikationssystem 100 den Nutzer 10 direkt Überprüfung der Notrufinformationen einbindet.

Das Regelwerk in der zweiten Komponente 300 besteht aus einem programmierten Algorithmus, der in einem geschlossenen Ablauf Informationen aus dem Notruf ermittelt und aus einem vordefinierten, endlichen Set an Antwortmöglichkeiten eine Verifikationsanfrage bildet, die dann an den ersten Nutzer 10 zurückzusenden ist.

Eine Verifikationsanfrage im Sinne der Erfindung ist eine Nachricht, die um Bestätigung des Inhalts der ersten Nachricht ganz oder spezifischer Aspekte davon auffordert. Dies kann beispielsweise sein: "Ist es korrekt, dass Sie einen Notfall auf der Autobahn melden möchten?" oder "Trifft es zu, dass es sich um einen Fahrradunfall handelt, und dass nur eine Person verletzt ist?" Bei einer alternativen Anwendung wird die Verifikationsanfrage in die erkannte Sprache des ersten Nutzers 10 übersetzt und/oder um Bestätigung der erkannten Sprache des ersten Nutzers 10 gebeten. Es ist ebenso denkbar, dass die Verifikationsanfrage die Aufforderung enthält, das Gespräch in einer anderen Sprache, beispielsweise die landesübliche, die regional übliche Sprache, oder auf Englisch fortzuführen.

Im Ablauf der automatisierten, regelbasierten Verifikation findet automatisch eine entsprechend EU AI Act geforderte Dokumentation der KI-Systemprozesse statt. Die nötige Basis für eine Qualitätssicherung ist somit gegeben und kann noch während der Notrufbearbeitung in der Leistelle zur Beurteilung der korrekten Informationsverarbeitung herangezogen werden.

Gleichzeitig am Anfang, wenn das Kommunikationssystem 100 den Notruf entgegennimmt, kann die Sprachnachricht durch die zweite Komponente 300 oder auch bereits durch das zweite Endgerät 500 entgegengenommen werden. Einerseits kann es zwar zu den zu vermeidenden Kommunikationsproblemen kommen, da der erste Nutzer 10 eine nichtübliche Sprache verwendet, andererseits können ggf. rudimentäre Informationen bereits vom zweiten Nutzer 20 herausgehört oder von der zweiten Komponente 300 verarbeitet werden. Es ist weiterhin denkbar, dass gleichzeitig zum zu Schritt iii.), in welchem innerhalb des Kommunikationssystems 100 vorgegangen wird, die Information durch das zweite Endgerät 500 entgegengenommen wird. So kann beispielsweise der zweite Nutzer 20 selbst entscheiden, ob der der Übersetzung durch die ersten Komponente 200 traut, oder - was möglich bleibt - abwartet, ob das Kommunikationssystem 100 die Verifikation herausgibt. Alternativ kann der zweite Nutzer 20 während des Wartens auf die Verifikation ggf. schon zeitlich relevante erste Schritte wie das Alarmieren eines Rettungsdienstes bewirken.

Es ist ebenso möglich, dass die erste Komponente 200 nach dem Erhalt der ersten Sprachnachricht, z.B. in besonders einfachen Fällen, initiativ ein oder mehrere Mal eigenständige Sprachnachrichten, wie etwa einfache Rückfragen, die mit "ja" oder "nein" zu beantworten sind, erzeugt und an das erste Endgerät 400 sendet und die entsprechenden Antworten als weitere Sprachnachrichten vom ersten Endgerät 400 entgegennimmt. Dies kann den Verifikationsprozess erleichtern oder erfüllt ihn mit einer höheren Erfolgsquote.

Die Daten eines Kommunikationsereignisses, wie etwa Zeitstempel, Anfangszeit, Endzeit, Zeitdauer, Telefonnummer des Anrufers, Lokalisation des Anrufers, Sprache, Kategorie des Anrufes oder der Notrufsituation, Verifikationserfolg, Ausfallereignisse, mithin Metadaten allgemein können gespeichert werden. Die Daten können zu Schulungszwecken, zur Evaluation oder zur Verbesserung des Trainings der KI-Komponenten des Systems verwendet werden.

## Patentansprüche

1. Verfahren zur Errichtung und Verbesserung einer Sprachkommunikation zwischen einem ersten Nutzer (10) und einem zweiten Nutzer (20), wobei die Schritte vorgesehen sind:
i.) Entgegennahme einer Sprachnachricht ausgehend von einem ersten Endgerät (400) durch eine erste Komponente (200) eines Kommunikationssystems (100),
ii.) Übertragen von Anteilen der Sprachnachricht in eine Information in der ersten Komponente (200), mithilfe eines neuronalen Netzes,
iii.) Übermitteln der Information an eine zweite Komponente (300) des Kommunikationssystems,
iv.) Übertragen der Information in eine Nachricht oder eine GUI-Nachricht durch die zweite Komponente (300) unter Anwendung eines vorbestimmten Regelwerkes sowie Senden der Nachricht an das erste Endgerät (400),
v.) Entgegennahme einer Verifikationsinformation vom ersten Endgerät durch die zweite Komponente (300),
vi.) Senden einer Vorabinformation an ein zweites Endgerät (500), sowie
vii.) Herstellen einer Kommunikationsverbindung zwischen erstem und zweitem Endgerät (400,
500).

2. Verfahren nach Anspruch 1, wobei gleichzeitig zu Schritt i.) die Sprachnachricht durch die zweite Komponente (300) und/oder das zweite Endgerät (500) entgegengenommen wird.

3. Verfahren nach einem der Ansprüche 1 oder 2, wobei gleichzeitig zu Schritt iii.) die Information durch das zweite Endgerät (500) entgegengenommen wird.

4. Verfahren nach einem der vorangehenden Ansprüche, wobei nach Schritt ii.) die erste Komponente (200) ein oder mehrere weitere Sprachnachrichten vom ersten Endgerät (400) entgegennimmt und jeweils antwortet.

5. Verfahren nach einem der vorangehenden Ansprüche, wobei die Daten eines Kommunikationsereignisses, zumindest umfassend Zeitstempel, Telefonnummer des Anrufers, vorzugsweise im Kommunikationssystem (100), gespeichert werden.

6. Verfahren nach einem der vorangehenden Ansprüche, wobei das neuronale Netz der ersten Komponente (200) vor Schritt i.) mit einem Datensatz umfassend Kommunikationsereignissen, insbesondere Kommunikation in Notrufsituationen, trainiert wird.

7. Kommunikationssystem (100) für zumindest teilweise sprachliche Kommunikationsereignisse, insbesondere Kommunikation in Notrufsituationen, **dadurch gekennzeichnet, dass** es
- eine erste Komponente (200) umfasst, die dazu ausgebildet ist, Nachrichten von einem ersten Endgerät (400) zu empfangen und Daten an eine zweite Komponente (300) zu senden, wobei die erste Komponente (200) ein neuronales Netz aufweist, das dazu ausgebildet ist, Anteile einer Sprachnachricht in eine Information zu übertragen,
- eine zweite Kommunikationseinheit (300), die dazu ausgebildet ist, Informationen von der ersten Komponente (200) zu empfangen sowie Nachrichten unter Anwendung eines vorbestimmten Regelwerkes zu erstellen und an das erste Endgerät (400) zu senden, eine Verifikationsinformation vom ersten Endgerät (400) zu empfangen,
und die ferner dazu ausgebildet ist, Informationen an ein zweites Endgerät (500), insbesondere eine Notrufleitstelle weiterzugeben.

8. Kommunikationssystem nach Anspruch 7, **dadurch gekennzeichnet, dass** ein zweites Endgerät (500) vorgesehen ist, wobei das zweite Endgerät (500) zumindest eine Schnittstelle zur Datenverbindung mit dem Kommunikationssystem (100), sowie eine Anzeige, Eingabemittel für einen zweiten Nutzer (20), insbesondere einen Leitstellenbediensteten, aufweist.
